(19) Europäisches Patentamt
European Patent Office
Office européen des brevets

(11) **EP 4 216 403 A1**

(12) **EUROPEAN PATENT APPLICATION**
published in accordance with Art. 153(4) EPC

(43) Date of publication:
**26.07.2023 Bulletin 2023/30**

(21) Application number: **21809896.0**

(22) Date of filing: **26.11.2021**

(51) International Patent Classification (IPC):
**H02K 9/06** (2006.01)   **H02K 7/14** (2006.01)
**H02K 21/02** (2006.01)   **H02K 5/20** (2006.01)
**H02K 5/16** (2006.01)

(86) International application number:
**PCT/KR2021/017687**

(87) International publication number:
**WO 2023/095964 (01.06.2023 Gazette 2023/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NAMWON TURBOONE CO., LTD.**
**Jeollanam-do 58296 (KR)**

(72) Inventors:
• LEE, Byeong Hag
  Dong-gu, Gwangju 61561 (KR)
• KIM, Min Ho
  Nam-gu, Gwangju 61713 (KR)
• LEE, Seung Tae
  Naju-si, Jeollanam-do 58282 (KR)

(74) Representative: **González López-Menchero, Álvaro Luis**
**Protectia Patentes y Marcas, S.L.**
**C/ Arte 21, 2°A**
**28033 Madrid (ES)**

(54) **STRUCTURE FOR INCREASING MOTOR EFFICIENCY OF TURBO BLOWER PERMANENT MAGNET MOTOR**

(57) The present disclosure provides a technology that can increase a motor efficiency of a turbo blower permanent magnet motor by proposing a cooling structure for efficiently cooling a permanent magnet motor employed in a turbo blower. External air inlets provided at a motor casing of a turbo blower are formed at positions close to a closing ring between the closing ring and one side of a stator, each have a circular hole shape with the same diameter, and are coaxially formed with regular intervals on the outer surface of the motor casing.

**FIG. 3**

EP 4 216 403 A1

## Description

## BACKGROUND

### (a) Technical Field

The present disclosure relates to a turbo blower apparatus and, more particularly, to a motor efficiency increasing structure for a permanent magnet motor of a turbo blower.

### (b) Background Art

A turbo blower includes a body that forms the external appearance, a driving unit that is disposed in the body and pressurizes air, and a controller that controls operation of the driving unit. Air flowing in the body through an air inlet formed at the body is pressurized over a predetermined pressure through the driving unit and is then discharged. However, in the related art, there is no internal structure for appropriately cooling the internal components of the driving unit, so there is a defect that durability of the entire driving unit is deteriorated due to reduction of the lifespan of the internal components.

A method of blowing a large amount of air through an air gap formed between a rotor and a stator or through a cooling hole formed at the stator is generally used to cool the driving unit. However, since this method blows a large amount of air at a good pressure using a cooling fan, it has a defect that the cooling efficiency is very low. Accordingly, there is a need for a new structure that can improve a motor efficiency of a turbo blower permanent magnet motor of by increasing the cooling efficiency for cooling a driving motor (i.e., a permanent magnet motor).

## SUMMARY OF THE DISCLOSURE

The present disclosure provides a technology that can increase a motor efficiency of a turbo blower permanent magnet motor by proposing a cooling structure for efficiently cooling a permanent magnet motor employed in a turbo blower. A plurality of external air inlets provided at a motor casing of a turbo blower are formed at positions close to a closing ring between the closing ring and one side of a stator, are each formed to have a circular hole shape with the same diameter, and are coaxially formed with regular intervals on the outer surface of the motor casing.

According to the present disclosure, there is an effect that it is possible to increase a motor efficiency of a turbo blower permanent magnet motor by proposing a cooling structure for efficiently cooling a permanent magnet motor employed in a turbo blower.

## BRIEF DESCRIPTION OF THE DRAWINGS

The above and other objectives, features and other advantages of the present invention will be more clearly understood from the following detailed description when taken in conjunction with the accompanying drawings, in which:

FIG. 1 is a perspective view of the external appearance of a turbo blower according to an embodiment of the present disclosure;

FIG. 2 is a side view showing the turbo blower of FIG. 1 from a side;

FIG. 3 is a vertical cross-sectional view based on FIG. 2; and

FIG. 4 is a reference view for describing a cooling structure of a turbo blower permanent magnet motor based no the vertical cross-sectional view of FIG. 3.

## DETAILED DESCRIPTION

The present disclosure may be modified in various ways and implemented by various exemplary embodiments, so that specific exemplary embodiments are shown in the drawings and will be described in detail herein. However, it is to be understood that the present disclosure is not limited to the specific exemplary embodiments, but includes all modifications, equivalents, and substitutions included in the spirit and the scope of the present disclosure.

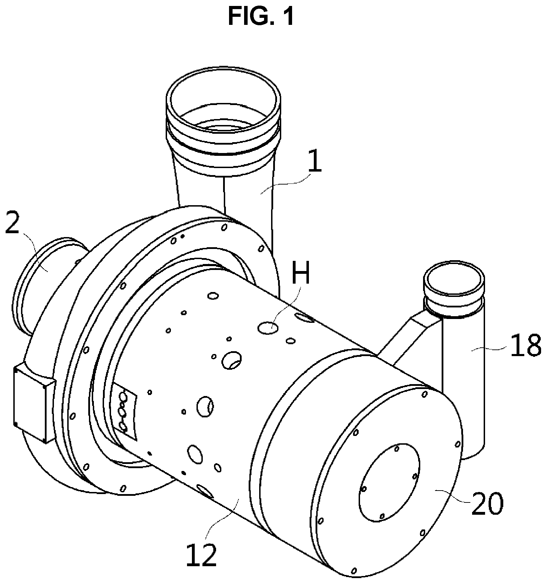

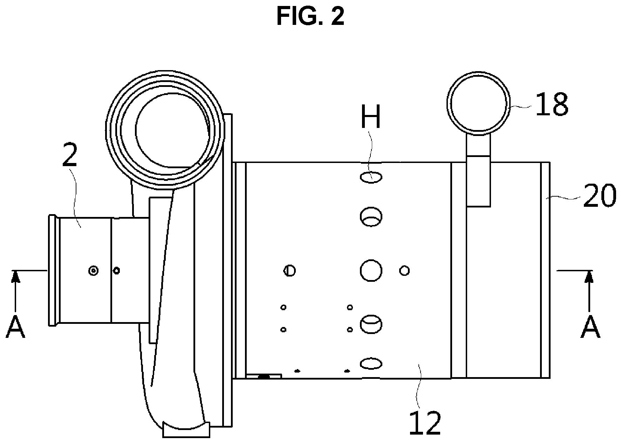

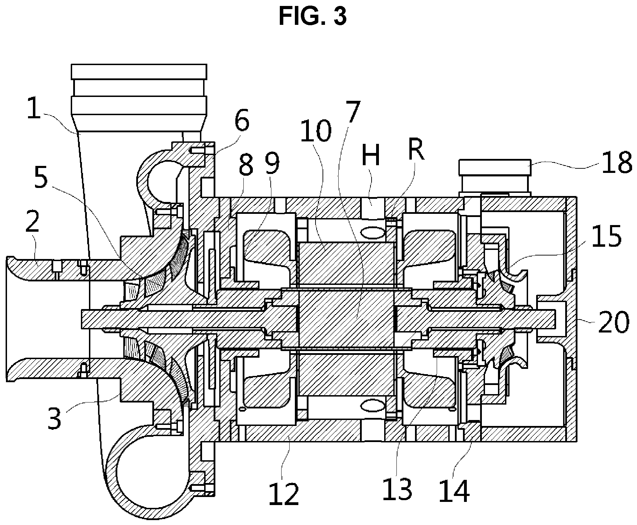

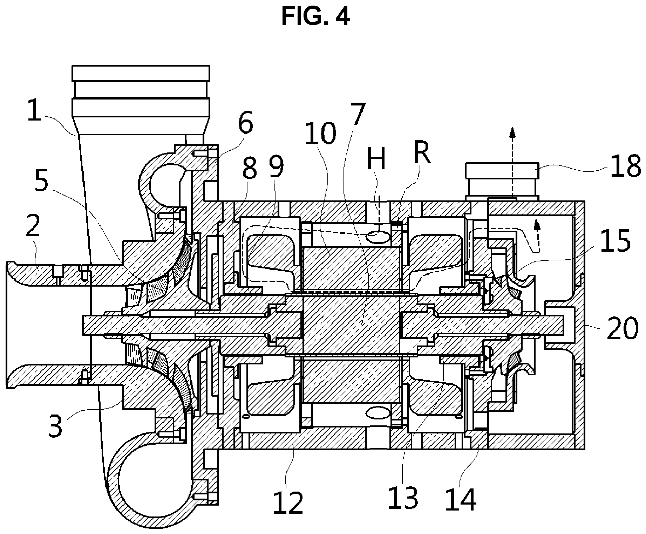

FIG. 1 is a perspective view of the external appearance of a turbo blower according to an embodiment of the present disclosure, FIG. 2 is a side view showing the turbo blower of FIG. 1 from a side, FIG. 3 is a vertical cross-sectional view based on FIG. 2, and FIG. 4 is a reference view for describing a cooling structure of a turbo blower permanent magnet motor based no the vertical cross-sectional view of FIG. 3. Hereinafter, embodiments of the present disclosure will be described in detail with reference to the accompanying drawings.

Referring to FIGS. 1 to 3 a turbo blower apparatus according to an embodiment of the present disclosure includes: a cylindrical motor casing 12; a permanent magnet motor that is disposed in the motor casing and includes a rotor 7 disposed at the center and a stator 10 disposed around the rotor; a left back plate 8 that is coupled to a rotary shaft at one side of the rotor and has a hole through which the rotary shaft at one side of the rotor passes; a left cap 6 that is coupled to a scroll ball root and includes a seal for preventing leakage of fluid; a light back plate 14 that is formed between another side of the rotor and a cooling fan 15; a first bearing housing 9 and a second bearing housing 13 that are disposed at both sides of the rotor and have a bearing for supporting rotation of the rotor; an impeller 5 that is formed on one surface of the left cap; a scroll ball root 1 that surrounds one side of the impeller, guides flow generated by the impeller, and converts kinetic energy of fluid into potential energy; a scroll cover 3 that is coupled to one side of the scroll ball root to surround the impeller and generates fluid pressure by making air flow smooth when the impeller is rotated at a high speed; a nozzle 2 that is coupled to one side of the scroll cover as an inlet through which air flows inside; a cooling fan 15 that is coupled to one side of the right back plate; a fan scroll 18 that surrounds the cooling fan to discharge fluid to the outside; a fan cap 20 that is coupled to one side of the fan scroll and prevents leakage of air; a closing ring R that is formed between the right back plate 14 and an one end of the stator 10 to prevent inflow/outflow of air; and a plurality of external air inlets H that are formed on the outer peripheral surface of the motor casing 12.

The turbo blower apparatus may have an air cooling path in which the air flowing inside through the plurality of external air inlets H, as shown in FIG. 4, cools the top of the stator 10 through an air gap between the motor casing 12 and the stator 10, cools the first bearing housing 9 by moving toward the left back plate 8, cools the entire bottom of the right back plate 10 and the entire outer surface of the rotor 7 by passing through the space between the stator 10 and the rotor 7 through an air gap formed between the rotor 7 and the stator 10, cools the second bearing housing 13 through an air gap formed between the right back plate 14 and another side of the stator 10, circulates in the fan scroll 18 through an air gap formed between the cooling fan 15 and the fan cap 20 by moving toward the cooling fan 15, and then is discharged to the outside.

Further, the external air inlets H, as shown in FIG. 4, are formed at positions close to the closing ring R between the closing ring R and one side of the stator 10, and as shown in FIGS. 1 and 2, are each formed to have a circular hole shape with the same diameter, and are coaxially formed with regular intervals on the outer surface of the motor casing 12.

In the turbo blower apparatus having this structure, in order to increase motor efficiency, each diameter of the plurality of external air inlets H is set to have a value that exceeds a lower limit in the following formula 1 and a value (upper limit) that does not exceed 1.5 times the lower limit by the formula 1.

[Formula 1]

$$D > \left(\frac{0.003085*P^{0.78}}{N}\right)^{0.845}$$

wherein, D is the diameter of the external air inlets H in meter, N is the number of the external air inlets H, and P is motor output of a permanent magnet motor of the turbo blower apparatus in kilowatt (Kw).

When each diameter of the plurality of external air inlets H has a value that is equal to or less than the lower limit, necessary motor cooling performance cannot be achieved. When the diameter has a value that exceeds the upper limit, external air excessively flows into the motor, so the motor cooling efficiency is greatly decreased. That is, in the present disclosure, it is possible to select a diameter of the external air inlets which can increase the motor efficiency by increasing the motor cooling efficiency on the basis of the motor output P and the number N of external air inlets of each turbo blower apparatus.

Although the present disclosure was described above with reference to exemplary embodiments, it should be understood that the present disclosure may be changed and modified in various ways by those skilled in the art, without departing from the spirit and scope of the present disclosure described in claims.

**Claims**

1. A turbo blower apparatus having a motor efficiency increasing structure, the turbo blower apparatus comprising: a cylindrical motor casing 12; a permanent magnet motor that is disposed in the motor casing and includes a rotor 7 disposed at the center and a stator 10 disposed around the rotor; a left back plate 8 that is coupled to a rotary shaft at one side of the rotor and has a hole through which the rotary shaft at the one side of the rotor passes; a left cap 6 that is coupled to a scroll ball root and includes a seal for preventing leakage of fluid; a light back plate 14 that is formed between another side of the rotor and a cooling fan 15; a first bearing housing 9 and a second bearing housing 13 that are disposed at both sides of the rotor and have a bearing for supporting rotation of the rotor; an impeller 5 that is formed on one surface of the left cap; a scroll ball root 1 that surrounds one side of the impeller, guides flow generated by the impeller, and converts kinetic energy of fluid into potential energy; a scroll cover 3 that is coupled to one side of the scroll ball root to surround the impeller and generates fluid pressure by making air flow smooth when the impeller is rotated at a high speed; a nozzle 2 that is coupled to one side of the scroll cover as an inlet through which air flows inside; a cooling fan 15 that is coupled to one side of the right back plate; a fan scroll 18 that surrounds the cooling fan to discharge fluid to the outside; a fan cap 20 that is coupled to one side of the fan scroll and prevents leakage of air; a closing ring R that is formed between the right back plate 14 and an one end of the stator 10 to prevent inflow/outflow of air; and a plurality of external air inlets H that is formed on the outer peripheral surface of the motor casing 12,

wherein the turbo blower apparatus may have an air cooling path in which the air flowing inside through the plurality of external air inlets H cools the top of the stator 10 through an air gap between the motor casing 12 and the stator 10, cools the first bearing housing 9 by moving toward the left back plate 8, cools the entire bottom of the right back plate 10 and the entire outer peripheral surface of the rotor 7 by passing through the space between the stator 10 and the rotor 7 through an air gap formed between the rotor 7 and the stator 10, cools the second bearing housing 13 through an air gap formed between the right back plate 14 and another side of the stator 10, circulates in the fan scroll 18 through an air gap formed between the cooling fan 15 and the fan cap 20 by moving toward the cooling fan 15, and then is discharged to the outside.

2. The turbo blower apparatus of claim 1, wherein the plurality of external air inlets H are formed at positions close to the closing ring R between the closing ring R and one side of the stator 10, are each formed to have a circular hole shape with the same diameter, and are coaxially formed with regular intervals on the outer peripheral surface of the motor casing 12.

3. The turbo blower apparatus of claim 2, wherein each diameter of the plurality of external air inlets H is set to have a value that exceeds a lower limit in the following Formula 1,

[Formula 1]

$$D > \left( \frac{0.003085 * P^{0.78}}{N} \right)^{0.845}$$

wherein, D is the diameter of the external air inlets H in meter, N is the number of the external air inlets H, and P is motor output of a permanent magnet motor of the turbo blower apparatus in kilowatt (Kw).

4. The turbo blower apparatus of claim 3, wherein each diameter of the plurality of external air inlets H is set to have a value that does not exceed 1.5 times the lower limit by Formula 1 above.

FIG. 1

# FIG. 2

# FIG. 3

## FIG. 4

<div align="center">

**INTERNATIONAL SEARCH REPORT**

</div>

| | International application No. |
|---|---|
| | **PCT/KR2021/017687** |

| **A.** | **CLASSIFICATION OF SUBJECT MATTER** |
|---|---|

**H02K 9/06**(2006.01)i; **H02K 7/14**(2006.01)i; **H02K 21/02**(2006.01)i; **H02K 5/20**(2006.01)i; **H02K 5/16**(2006.01)i

According to International Patent Classification (IPC) or to both national classification and IPC

| **B.** | **FIELDS SEARCHED** |
|---|---|

Minimum documentation searched (classification system followed by classification symbols)

H02K 9/06(2006.01); F02C 7/04(2006.01); F02C 7/143(2006.01); F04D 29/28(2006.01); F04D 29/58(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 영구자석모터(permanent magnet motor), 백플레이트(back plate), 레프트캡 (left cap), 베어링하우징(bearing housing), 스크롤볼루트(scroll volute), 임펠러(impeller), 스크롤덮개(scroll cover), 노즐 (nozzle), 쿨링팬(cooling fan), 팬캡(fan cap), 폐쇄링(closing ring)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | KR 10-2146187 B1 (NAMWON TURBOONE CO., LTD.) 19 August 2020 (2020-08-19) See paragraphs [0018]-[0022]; claim 1; and figures 1-4. | 1-2 |
| A | | 3-4 |
| A | KR 10-2020-0128897 A (NAMWON TURBOONE CO., LTD.) 17 November 2020 (2020-11-17) See paragraphs [0018]-[0025]; and figures 1-4. | 1-4 |
| A | KR 10-2014-0017924 A (ACE TURBO CO., LTD.) 12 February 2014 (2014-02-12) See paragraphs [0038]-[0044]; and figures 4-6. | 1-4 |
| A | KR 10-2020-0140063 A (HANWHA POWER SYSTEMS CO., LTD.) 15 December 2020 (2020-12-15) See paragraphs [0033]-[0070]; and figures 1-8. | 1-4 |
| A | US 2020-0392900 A1 (TURBOWIN CO., LTD.) 17 December 2020 (2020-12-17) See paragraphs [0089]-[0146]; and figures 1-6. | 1-4 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 August 2022** | **24 August 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

International application No.

**PCT/KR2021/017687**

| Patent document cited in search report | | | Publication date (day/month/year) | Patent family member(s) | | | Publication date (day/month/year) |
|---|---|---|---|---|---|---|---|
| KR | 10-2146187 | B1 | 19 August 2020 | None | | | |
| KR | 10-2020-0128897 | A | 17 November 2020 | None | | | |
| KR | 10-2014-0017924 | A | 12 February 2014 | KR | 10-1377057 | B1 | 24 March 2014 |
| KR | 10-2020-0140063 | A | 15 December 2020 | US | 2020-0389069 | A1 | 10 December 2020 |
| US | 2020-0392900 | A1 | 17 December 2020 | CN | 112081777 | A | 15 December 2020 |
| | | | | DE | 102020115249 | A1 | 17 December 2020 |
| | | | | JP | 2020-200832 | A | 17 December 2020 |
| | | | | JP | 6976000 | B2 | 01 December 2021 |
| | | | | KR | 10-2050810 | B1 | 04 December 2019 |

Form PCT/ISA/210 (patent family annex) (July 2019)